(19) Europäisches Patentamt
European Patent Office
Office européen des brevets

(11) **EP 1 131 789 B1**

(12) **FASCICULE DE BREVET EUROPEEN**

(45) Date de publication et mention
de la délivrance du brevet:
**23.01.2013 Bulletin 2013/04**

(21) Numéro de dépôt: **00962634.2**

(22) Date de dépôt: **14.09.2000**

(51) Int Cl.:
***G06T 7/00*** *(2006.01)*

(86) Numéro de dépôt international:
**PCT/FR2000/002537**

(87) Numéro de publication internationale:
**WO 2001/022366 (29.03.2001 Gazette 2001/13)**

(54) **PROCEDE DE CONSTRUCTION D'UN MODELE DE SCENE 3D PAR ANALYSE DE SEQUENCE D'IMAGES**

VERFAHREN ZUR KONSTRUKTION EINES DREIDIMENSIONALEN SZENENMODELLS DURCH BILDSEQUENZANALYSE

METHOD FOR BUILDING A THREE-DIMENSIONAL SCENE MODEL BY ANALYSING A SEQUENCE OF IMAGES

(84) Etats contractants désignés:
**DE ES FR GB IT**

(30) Priorité: **17.09.1999 FR 9911671**

(43) Date de publication de la demande:
**12.09.2001 Bulletin 2001/37**

(73) Titulaire: **Thomson Licensing
92130 Issy-les-Moulineaux (FR)**

(72) Inventeurs:
• **ROBERT, Philippe
Thomson multimedia
F-92648 Boulogne Cedex (FR)**
• **NICOLAS, Yannick
Thomson multimedia
F-92648 Boulogne Cedex (FR)**

(74) Mandataire: **Streit, Arend
Deutsche Thomson OHG
European Patent Operations
Karl-Wiechert-Allee 74
30625 Hannover (DE)**

(56) Documents cités:
**EP-A- 0 735 512     US-A- 5 511 153**

• **J.K. AGGARWAL ET AL.: "determining motion parameters using intensity guided range sensing" PATTERN RECOGNITION., vol. 19, no. 2, 1986, pages 169-180, XP002143346 PERGAMON PRESS INC. ELMSFORD, N.Y., US ISSN: 0031-3203**
• **KOCH R ET AL: "Multi Viewpoint Stereo from Uncalibrated Video Sequences", LECTURE NOTES IN COMPUTER SCIENCE, SPRINGER VERLAG, DE, vol. 1406, 1 January 1998 (1998-01-01), pages 55-71, XP009128346, ISSN: 0302-9743**
• **PETER RANDER: "A Multi-Camera Method for 3D Digitization of Dynamic, Real-World Events", THESIS, vol. CMU-RI-TR-98-12, 1 May 1998 (1998-05-01), page 136PP, XP007911252,**

EP 1 131 789 B1

**Description**

L'invention concerne un procédé de construction d'un modèle de scène 3D par analyse de séquence d'images.

Le domaine est celui du traitement des séquences d'images et de la modélisation des scènes réelles statiques dans un contexte de navigation. La séquence est constituée d'images relatives à des scènes statiques à l'intérieur desquelles évolue le point de vue, c'est à dire la caméra.

L'objectif est de permettre à un utilisateur de naviguer virtuellement dans une scène réelle. Or les données sur la scène sont constituées de séquences d'images, qui peuvent représenter une énorme quantité d'informations. Ces séquences doivent être traitées de façon à fournir une représentation compacte de la scène, utilisable de façon optimale pour la navigation, c'est-à-dire permettant un rendu interactif, avec une qualité d'images contrôlée. Le problème est d'obtenir un taux de compression élevé tout en évitant les techniques de type prédictif inter-images, non adaptées à la navigation.

Différentes représentations de scènes existent actuellement. Il est possible de distinguer principalement :

- les représentations à partir de modèles 3D, dans lesquelles la géométrie de la scène est généralement représentée sous la forme de facettes planes auxquelles sont associées des images de texture. Cette modélisation est très utilisée pour représenter des scènes synthétiques obtenues par des logiciels de type CAO (conception assistée par ordinateur). En revanche, elle est encore peu utilisée pour représenter des scènes réelles, car elle est complexe. Les méthodes actuelles utilisent peu d'images, généralement des photographies, et les représentations qui en résultent sont sommaires, manquent de réalisme.

- les représentations non 3D obtenues par exemple à partir du logiciel QuickTime VR (marque déposée de la société Apple). Les données de la scène sont acquises sous la forme de panoramiques, avec séquences d'images de transition pour passer d'un panoramique à un autre. Une telle représentation limite considérablement les possibilités de navigation dans la scène virtuelle.

KOCH R et al.: "Multi Viewpoint Stereo from uncalibrated Video Sequences", LECTURE NOTES IN COMPUTER SCIENCES, SPRINGER VERLAG, DE; VOL: 1406, 1 JANVIER 1998, pages 55-71, décrivent un système, de création d'un modèle 3D à partir d'une séquence vidéo issue d'une caméra non calibrée.

RANDER PETER: "A Multi-Camera Method of 3D Digitization of Dynamic, Real-World Events", THESIS, vol. CMU-RI-TR-98-12, 1 Mai 1998, page 136pp, décrit une méthode de raffinement itératif d'un modèle 3D obtenu à partir de vidéos acquises sous différents angles.

L'invention a pour but de pallier les inconvénients précités. Elle a pour objet un procédé de construction d'un modèle de scène 3D par analyse de séquence d'images, chaque image correspondant à un point de vue défini par sa position et son orientation, caractérisé en ce qu'il comporte les étapes suivantes :

- calcul, pour une image, d'une carte de profondeur (1) correspondant à la profondeur, dans l'espace 3D, des pixels de l'Image,

- calcul, pour une image, d'une carte de résolution (2) correspondant à la résolution 3D des pixels de l'image, à partir de la carte de profondeur, la résolution 3D est calculée, pour chaque pixel de l'image, comme étant la densité de points dans l'espace 3D relatifs à une fenêtre centrée sur le pixel,

- mise en correspondance (6) d'un pixel d'une image courante avec un pixel d'une autre image de la séquence, pixels relatifs à un même point de la scène 3D, par projection du pixel de l'image courante sur l'autre image,

- sélection d'un pixel de l'image courante (6) en fonction de sa résolution et de celle des pixels d'autres images de la séquence mis en correspondance avec ce pixel,

- construction du modèle 3D (8) à partir des pixels sélectionnés.

Selon un mode particulier de réalisation, le procédé est caractérisé en ce que, une ou plusieurs régions sont constituées à partir des pixels sélectionnés d'une image, des poids sont calculés et attribués aux pixels de l'image en fonction de leur appartenance ou non aux régions et des caractéristiques géométriques des régions auxquelles ils appartiennent dans l'image et en ce qu'une nouvelle sélection des pixels est effectuée en fonction des valeurs de résolution et de poids affectées aux pixels.

Selon un mode particulier de réalisation, qui peut être combiné au précédent, le procédé est caractérisé en ce qu'un partitionnement des images de la séquence est effectué en identifiant, pour une image courante, les images dont les points de vue correspondants ont un champ d'observation possédant une intersection avec le champ d'observation relatif à l'image courante, pour former une liste d'images qui lui est associée, et en ce que les autres images de la séquence pour lesquelles la mise en correspondance des pixels de l'image courante est effectuée sont les images de sa liste.

Le partitionnement des images de la séquence peut être complété en enlevant de la liste associée à une image, les Images qui possèdent trop peu de pixels correspondant à ceux de l'image courante.

L'invention concerne également un procédé de navigation dans une scène 3D consistant à créer des images en fonction du déplacement du point de vue, caractérisé en ce que les images sont créées à partir du procédé de construction du modèle 3D précédemment décrit.

Les séquences d'images représentent une quantité de données très importante avec une forte redondance inter-images. L'utilisation d'un modèle 3D qui est le meilleur modèle de représentation d'une scène réelle statique et la mise en correspondance des images par de simples transformations géométriques permettent d'identifier largement la redondance inter-images. Ce modèle permet en effet de prendre en compte un grand nombre d'images. D'autre part, il ne nécessite pas d'opérations de compensation de mouvement au niveau de l'image 2D.

Un meilleur compromis entre compacité, c'est à dire compression des données à stocker et traiter, interactivité et qualité de rendu est réalisé : malgré le taux de compression élevé, le procédé fournit des images de bonne qualité et permet une grande souplesse et rapidité dans la navigation.

L'invention permet d'obtenir un meilleur réalisme que celui obtenu avec les techniques de modélisation 3D actuelles ainsi qu'une meilleure flexibilité que celle obtenue avec les techniques classiques de codage d'images.

Les caractéristiques et avantages de la présente invention ressortiront mieux de la description suivante, donnée à titre d'exemple et en référence aux figures annexées où :

- la figure 1 représente un algorithme de traitement décrivant les étapes d'un procédé selon l'invention,
- la figure 2 représente les référentiels associés à un point de vue.

L'acquisition des données de la scène réelle est étroitement liée à la représentation envisagée. Dans notre exemple, nous nous plaçons dans la situation où les images sont acquises par une caméra standard, à la cadence vidéo, et le mouvement de caméra est élaboré de manière à correspondre aux trajets prévus en cours d'exploitation. Dans ce contexte, la construction d'une représentation de scène à partir de séquences d'images peut être apparentée aux techniques de codage d'images.

Le principe de construction de la représentation d'une scène est de sélectionner les données nécessaires et suffisantes assurant la reconstruction des images de la séquence avec une qualité contrôlée. Le processus consiste à comparer les images une à une pour sélectionner les régions ayant la meilleure pertinence, paramètre qui dépend de la résolution et du coût de description. En fait, la comparaison est effectuée au niveau des pixels : le critère de base pour la comparaison et la sélection des pixels est la résolution de la surface locale 3D associée à chaque pixel.

Nous supposons que par un traitement adéquat, connu de l'art antérieur, nous obtenons, pour chaque point de vue, sa position 3D dans un référentiel associé à la scène (position et orientation du point de vue), ainsi qu'une carte de profondeur associée à l'image relative au point de vue. La phase suivante a pour objet de constituer une représentation compacte de l'ensemble de ces données adaptée à la navigation.

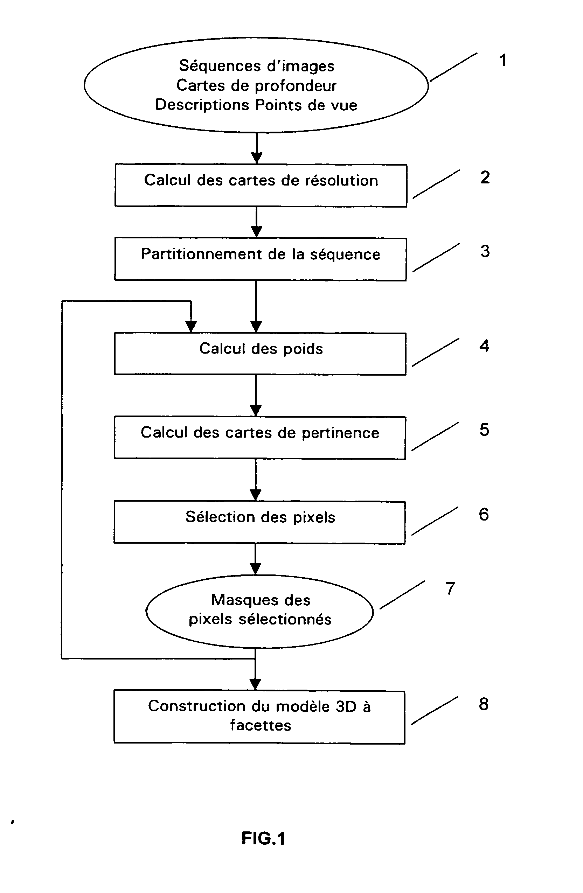

La figure 1 représente un organigramme décrivant les différentes étapes du procédé selon l'invention.

Nous disposons en entrée du système, référencée 1, des données relatives à une séquence d'images acquise par une caméra se déplaçant dans une scène réelle statique comme indiqué précédemment. Il est cependant tout à fait envisageable que certains objets mobiles soient présents dans l'image. Dans ce cas, un traitement spécifique identifie ces objets qui sont alors marqués pour être ignorés lors des traitements ultérieurs. Un traitement ad hoc fournit, pour chaque image, une carte de profondeur ainsi que la position et l'orientation du point de vue correspondant. Il n'y a pas d'information de profondeur dans les zones correspondant à des objets mobiles supprimés.

Pour chaque pixel de chaque image est calculée une valeur de résolution, c'est l'étape 2. Un premier et un deuxième partitionnement sont ensuite réalisés lors de l'étape 3. L'étape 4 effectue un calcul de poids pour fournir, étape 5, des valeurs de pertinence attribuées aux pixels. L'étape suivante 6 réalise une sélection des pixels en fonction de leur pertinence. Une séquence de masques des pixels sélectionnés est ensuite obtenue pour la séquence d'images, à l'étape 7. Après cette étape 7, les étapes 4 à 7 sont réitérées pour affiner les masques. Ces étapes sont réitérées jusqu'à ce que les masques n'évoluent plus de manière significative. Alors, l'étape 8 est abordée pour réaliser la construction du modèle 3D à facettes à partir des seuls pixels sélectionnés.

Les différentes étapes sont maintenant expliquées en détail.

En entrée du système est disponible, pour chaque image de la séquence, une carte de profondeur ainsi que la position et l'orientation du point de vue correspondant.

L'étape 2 consiste en un calcul, pour chaque pixel d'une image, d'une valeur de résolution donnant une carte de résolution pour l'image.

La résolution en chaque pixel fournit une indication du niveau de détail de la surface telle qu'elle est vue du point de vue courant. Elle peut être, par exemple, calculée sur un bloc de points centré sur le pixel et correspond à la densité des points dans la scène, c'est à dire dans l'espace 3D, relatifs à ce bloc.

Dans un exemple, une fenêtre de 7x7 pixels centrée sur le pixel de l'image pour lequel la résolution est calculée, est exploitée. Pour chacun des pixels appartenant à cette fenêtre, l'information de profondeur est traitée pour déterminer, à partir de la répartition dans l'espace 3D des points autour du pixel traité, la résolution 3D : une répartition des points sur une grande profondeur donnera une moins bonne résolution qu'une répartition des points sur une faible profondeur. Après traitement de tous les pixels de l'image, on obtient une carte de résolution de l'image et cela pour chacune des images de la séquence.

Le procédé réalise ensuite, étape 3, une partition de la séquence.

La phase de navigation consiste à interpoler l'image du point de vue courant à partir du modèle 3D. Le modèle peut être très grand, et il est donc utile de le partitionner afin de limiter à chaque instant la quantité d'informations à traiter pour la reconstruction d'un point de vue. En effet, il est important que les images soient interpolées en temps limité afin de garantir une bonne fluidité de navigation. Par ailleurs, la comparaison des images pixel à pixel dans la phase 6 de sélection des données, décrite plus loin, est une opération lourde, en particulier si les séquences sont longues. Cette remarque plaide aussi pour un partitionnement, effectué le plus tôt possible, pour réduire la quantité de calculs.

Deux opérations de partitionnement sont en fait effectuées pour limiter la manipulation des données, tant dans la phase de construction de la représentation que dans la phase d'exploitation (navigation).

Un premier partitionnement de la séquence est effectué en identifiant les points de vue n'ayant pas d'intersection de leur champ d'observation. Ce qui permettra d'éviter de les comparer, c'est à dire de comparer les images relatives à ces points de vue, lors des étapes suivantes. On détermine donc les intersections éventuelles entre les champs d'observation, de forme pyramidale, de chaque point de vue, en détectant les intersections entre les bords de ces champs. Cette opération ne dépend pas du contenu de la scène, mais uniquement de la position relative des points de vue. A chaque image courante est ainsi associé un ensemble d'images dont le champ d'observation possède une intersection avec celui de cette image courante, cet ensemble constituant une liste.

Une projection est effectuée lors de cette étape 3 de partitionnement permettant un deuxième partitionnement. Pour chaque groupe d'image, une projection, similaire à celle décrite plus loin en regard de l'étape 6, est réalisée pour identifier les pixels mis en correspondance. Si une image a trop peu de pixels mis en correspondance avec les pixels d'une image de sa liste, cette dernière est supprimée de la liste.

Il résulte de ces partitionnements, pour chaque point de vue, une liste ou groupe de points de vue ayant des points 3D en commun avec lui, et qui vont donc être comparés lors de la sélection des pixels pour réduire la redondance. Un tableau est constitué afin d'identifier, pour chaque image de la séquence, les images sélectionnées nécessaires à sa reconstruction.

Lors de la projection, les pixels n'ayant aucune correspondance sont marqués en forçant la valeur de résolution, par exemple à 1. Grâce à ce marquage particulier, on saura, lors de l'étape 6, qu'il n'est pas nécessaire de reprojeter ces pixels pour la recherche des pixels mis en correspondance. Cette opération de projection est en effet répétée à l'étape 6 afin d'éviter la mémorisation des informations relatives à ces correspondances, obtenues lors de l'étape 3, ces informations représentant un très grand nombre de données.

L'étape 4 consiste en un calcul de poids pour chacun des pixels d'une image. Ce paramètre est introduit afin de prendre en compte le coût des pixels conservés. En l'absence de contrainte supplémentaire sur la sélection des pixels, ceux-ci peuvent constituer des régions de tailles et de formes diverses, et le coût de description de ces régions peut être élevé. Pour éviter ce problème, un poids prenant en compte la classification des pixels dans l'environnement proche (pixel sélectionné ou pas) est associé à chaque pixel. Le poids peut être choisi de façon à pénaliser les régions de petite taille ou plus grossièrement, les images ayant peu de points sélectionnés. Dans ce cas, ce peut être une valeur par image, par exemple le pourcentage de points sélectionnés. Il est également possible d'appliquer des filtres morphologiques sur le masque décrivant les régions de points sélectionnés afin de réduire la complexité de leur forme et donc réduire le coût de description.

Les critères qui peuvent être pris en compte pour le calcul de poids sont par exemple :

- la quantité des points sélectionnés dans l'image
- la taille des régions
- la compacité des régions (inversement proportionnelle au poids)
- la zone périphérique des régions pour tenir compte par exemple des pointes à éliminer. Un filtre morphologique peut également être passé sur le masque avant le calcul du poids pour supprimer ces zones périphériques de faible surface.

A la première itération, les masques sont initialisés à la valeur 0, c'est à dire que tous les pixels sont sélectionnés par défaut. Les poids calculés, lors de ce premier passage à l'étape 4, sont donc à la valeur unité. Une variante consiste à choisir, comme poids pour tous les pixels de l'image, lors de cette première itération, le pourcentage de points de l'image n'ayant pas de correspondant dans les autres images par rapport au nombre de points de l'image. On favorise ainsi la conservation des images contenant le plus de pixels sans correspondant (voir étapes 5 et 6 pour la sélection des pixels).

Une valeur de pertinence combinant la résolution et le poids est déduite lors de l'étape 5. Elle peut par exemple être calculée ainsi :

$$\text{pertinence} = \text{résolution} \times (1 + \text{poids})$$

Une valeur est attribuée à chaque pixel pour fournir une carte de pertinence par image.

L'objectif est ici d'obtenir le maximum des points décrivant la scène sur un minimum d'images, les pixels étant sélectionnés (voir étape 6) en fonction de leur valeur de pertinence.

La sélection des pixels est l'objet de l'étape 6

Il s'agit ici d'une recherche, pour chaque pixel, du correspondant dans les autres points de vue, et d'une comparaison des valeurs de pertinence pour l'identification du pixel à meilleure pertinence.

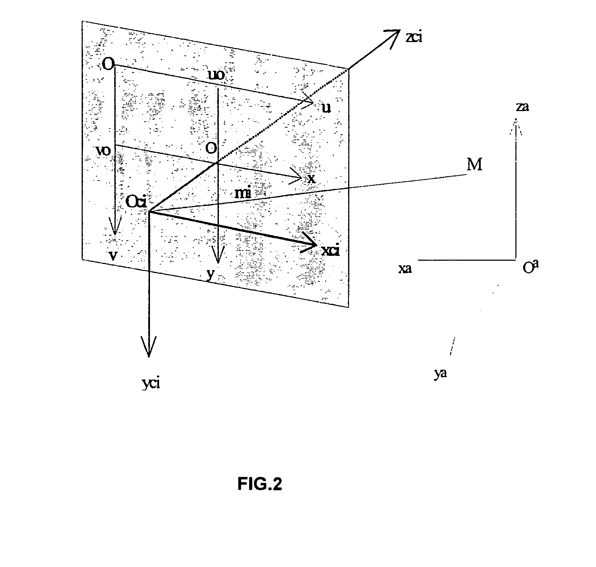

Pour ce faire, une correspondance entre les pixels des différentes images est effectuée par transformation géométrique. La figure 2 décrit un repère image (O, u, v) correspondant à une image i , c'est à dire une image associée à un point de vue i, un référentiel (Oci, xci, yci, zci) lié au point de vue i (par exemple Oci confondu avec la position du point de vue i) et un référentiel absolu (Oa, xa, ya, za).

Pour chaque point de vue i, on dispose de sa position et de son orientation dans le référentiel absolu. Chaque pixel (u,v) de l'image dispose d'une valeur de profondeur zci(u,v) définie dans le repère (Oci, xci, yci, zci) associé au point de vue i.

On connaît la transformation géométrique qui permet de passer du repère image (O, u, v) au repère (Oci, xci, yci, zci) lié au point de vue, ainsi que les transformations géométriques permettant de passer de ce repère au repère absolu (Oa,xa,ya,za) lié à la scène.

Ce sont ces transformations qui sont utilisées pour passer d'une image à une autre, c'est à dire pour mettre en correspondance les pixels d'une image aux pixels d'une autre image, comme indiqué ci-après.

Chaque pixel est le résultat de la projection d'un point de l'espace 3D sur le plan image 2D du point de vue courant i. Partant d'un pixel de l'image i (dont la composante z est connue), qui correspond à un point quelconque de la scène, on peut déterminer son point de projection dans une image j par transformation géométrique connue. Si ce point de projection coïncide avec un pixel de l'image, il y a correspondance des pixels. Dans le cas contraire, ce point de projection 2D est associé au pixel le plus proche. On considère alors que ces 2 pixels (celui de départ et celui d'arrivée), qui sont relatifs à des points très proches d'une même surface dans la scène, sont en correspondance et que leurs caractéristiques peuvent être comparées.

La mise en correspondance des pixels d'une image est effectuée sur l'ensemble des images de sa liste, objet de la partition définie à l'étape 3. Chaque pixel est projeté sur chacune des autres images du groupe: il est mis en correspondance avec un pixel comme décrit ci-dessus. La valeur de pertinence est comparée et le pixel ayant la moins bonne pertinence est marqué. Le processus de comparaison du pixel aux pixels correspondants est stoppé dès que l'on trouve un correspondant qui a une meilleure pertinence.

Ces opérations permettent donc d'identifier et supprimer la redondance inter-images en ne conservant que les pixels à meilleure pertinence. Toutefois, tout en réduisant la redondance, il peut être intéressant de conserver plus d'une représentation d'une surface donnée pour éviter d'avoir à manipuler la représentation à résolution maximale pour créer des points de vue lointains.

Il est donc avantageux d'introduire un seuil sur la comparaison des valeurs de résolution : si le rapport entre deux valeurs de résolution dépasse ce seuil, aucun des pixels n'est marqué. Ainsi, chacun des pixels peut être utilisé en fonction de la résolution souhaitée, fine ou grossière.

Le marquage des pixels se fait en initialisant tout d'abord tous les pixels de tous les masques par exemple à la valeur binaire 1. Chaque pixel est comparé avec son correspondant, s'il existe, dans les autres points de vue associés lors des phases de partitionnement. Celui qui possède la pertinence la plus faible est marqué à 0, c'est-à-dire qu'il est rejeté. En conséquence, si aucun de ses correspondants n'a une plus grande pertinence que le pixel courant, celui-ci est sélectionné, puisqu'il conserve le marquage initial. Il en résulte donc, pour chaque image de la séquence, un masque ou image binaire, les pixels pour lesquels la valeur 1 est attribuée correspondant aux pixels sélectionnés.

L'étape 7 regroupe les masques relatifs à chacune des images constituant la séquence pour fournir la séquence de masques.

L'étape 7 est rebouclée sur l'étape 4 pour affiner les valeurs de pertinence calculées. A chaque itération, les poids et donc les valeurs de pertinence sont recalculés à partir des masques obtenus à l'itération précédente.

Les opérations de projections sont reproduites à chaque itération et concernent l'ensemble des pixels de l'image, des pixels non sélectionnés lors d'une précédente itération pouvant être sélectionnés du fait par exemple d'une diminution de la valeur de pertinence d'un pixel avec qui il est mis en correspondance. Cependant, les pixels n'ayant pas de correspondant dans les autres images ne sont pas projetés.

Pour réduire les calculs, il est possible, à chaque itération, de supprimer de la liste des images associée à une image courante, les images n'ayant plus aucun pixel à meilleure pertinence que le pixel correspondant dans l'image courante. La liste finale d'une image donnée contient ainsi les images nécessaires et suffisantes pour sa reconstruction.

Le processus itératif est stoppé après un nombre déterminé d'itérations ou bien lorsqu'il n'y a plus de changements significatifs dans les masques. Une fois ces masques définitifs obtenus, l'étape 8 succède à l'étape 7 et ceux-ci sont exploités dans la phase de construction du modèle 3D à facettes, la construction étant effectuée à partir des seuls pixels sélectionnés, définis par ces masques.

Les données relatives à ce modèle 3D à facettes sont composées d'une information de géométrie et d'une information de texture. Pour chaque région sélectionnée, définie par les masques, sa silhouette est polygonisée et la carte de profondeur correspondante est approximée par des triangles 3D. Les données de texture sélectionnées sont regroupées de façon à ne pas conserver les zones inutiles. Un modèle 3D peut facilement être constitué à partir de l'ensemble de ces informations.

La liste des images et donc des régions associées à chaque image peut aussi être avantageusement prise en compte dans la constitution du modèle 3D pour partitionner celui-ci. Ce partitionnement peut ensuite être exploité dans la phase de rendu pour limiter la quantité d'informations à traiter lors de la reconstruction d'images.

Le procédé de navigation dans la scène 3D qui consiste à créer des images en fonction du déplacement du point de vue, exploite l'ensemble de ces informations pour recréer les images.

## Revendications

1. Procédé de construction d'un modèle de scène 3D par analyse de séquence d'images, chaque image correspondant à un point de vue défini par sa position et son orientation, **caractérisé en ce qu'**il comporte les étapes suivantes :

   - calcul, pour une image, d'une carte de profondeur (1) correspondant à la profondeur, dans l'espace 3D, des pixels de l'image,
   - calcul, pour une image, d'une carte de résolution (2) correspondant à la résolution 3D des pixels de l'image, à partir de la carte de profondeur, la résolution 3D étant calculée, pour chaque pixel de l'image, comme étant la densité de points dans l'espace 3D relatifs à une fenêtre centrée sur le pixel,
   - mise en correspondance (6) d'un pixel d'une image courante avec un pixel d'une autre image de la séquence, relatif à un même point de la scène 3D, par projection du pixel de l'image courante sur l'autre image,
   - sélection d'un pixel de l'image courante (6) en fonction de sa résolution 3D et de celle des pixels d'autres images de la séquence mis en correspondance avec ce pixel,
   - construction du modèle 3D (8) à partir des pixels sélectionnés.

2. Procédé selon la revendication 1, **caractérisé en ce que**, une ou plusieurs régions sont constituées à partir des pixels sélectionnés d'une image, des poids sont calculés et attribués aux pixels de l'image (4) en fonction de leur appartenance ou non aux régions et des caractéristiques géométriques des régions auxquelles ils appartiennent dans l'image et **en ce qu'**une nouvelle sélection des pixels (6) est effectuée en fonction des valeurs de résolution et de poids affectées aux pixels.

3. Procédé selon la revendication 2, **caractérisé en ce qu'**une valeur de pertinence (5) est attribuée à chaque pixel d'une image en fonction du poids et de la résolution affectés à ce pixel et **en ce qu'**une sélection des pixels (6) d'une image courante est effectuée à partir de la plus forte valeur de pertinence (5) parmi les pixels mis en correspondance pour donner un masque de pixels sélectionnés.

4. Procédé selon la revendication 1, **caractérisé en ce qu'**un partitionnement (2) des images de la séquence est effectué en identifiant, pour une image courante, les images dont les points de vue correspondants ont un champ d'observation possédant une intersection avec le champ d'observation relatif à l'image courante, pour former une liste d'images qui lui est associée, et **en ce que** les autres images de la séquence pour lesquelles la mise en correspondance des pixels de l'image courante (6) est effectuée sont les images de sa liste.

5. Procédé selon la revendication 4, **caractérisé en ce qu'**un partitionnement (2) des images de la séquence est effectué en enlevant de la liste associée à une image, les images qui possèdent trop peu de pixels correspondant à ceux de l'image courante.

6. Procédé selon la revendication 3, **caractérisé en ce que** les opérations de calcul de poids (4), de calcul de pertinence (5) et de sélection des pixels sont réitérées jusqu'à ce que les masques obtenus à partir de la sélection n'évoluent plus de manière significative.

7. Procédé selon la revendication 3, **caractérisé en ce que** les opérations de mise en correspondance d'un pixel de l'image courante, par projection sur les autres images, sont arrêtées pour ce pixel dès qu'un pixel correspondant ayant une valeur de pertinence plus grande est trouvé.

8. Procédé selon la revendication 3, **caractérisé en ce que** la sélection à partir des valeurs de pertinence est effectuée lorsque le rapport entre les valeurs de résolution des pixels mis en correspondance se trouve à l'intérieur de limites prédéfinies.

9. Procédé selon la revendication 1, **caractérisé en ce que** le pixel de l'autre image est le pixel le plus proche du point de projection (6) sur cette autre image.

10. Procédé selon la revendication 1, **caractérisé en ce que** les objets mobiles se déplaçant dans la scène sont détectés pour en être extraits afin d'obtenir une scène de type statique.

11. Procédé de navigation dans une scène 3D consistant à créer des images en fonction du déplacement du point de vue, **caractérisé en ce que** les images sont créées à partir du modèle 3D construit selon le procédé de la revendication 1.

## Claims

1.  Method for building a three-dimensional scene model by analysing image sequences, each image corresponding to a viewpoint defined by its position and orientation, **characterised in that** it comprises the following steps:

    - calculating, for an image, a depth map (1) corresponding to the depth, in three-dimensional space, of pixels of the image,
    - calculating, for an image, a resolution map (2) corresponding to the three-dimensional resolution of the pixels of the image, from the depth map, the three-dimensional resolution being calculated, for each pixel of the image, as being the point density in three-dimensional space relative to a window centred on the pixel,
    - matching (6) a pixel of a current image with a pixel of another image of the sequence, relative to an equivalent point of the three-dimensional scene, by projecting the pixel of the current image onto the other image,
    - selecting a pixel of the current image (6) according to its three-dimensional resolution and to that of the pixels of other images of the sequence matched with this pixel,
    - constructing the three-dimensional model (8) from the selected pixels.

2.  Method according to claim 1, **characterised in that** the selected pixels of an image constitute one or more regions, weights are calculated and allocated to the pixels of the image (4) according to whether or not they belong to the regions and to the geometric characteristics of the region to which they belong in the image and a new selection of the pixels (6) is performed according to the resolution and weight values assigned to the pixels.

3.  Method according to claim 2, **characterised in that** a relevance value (5) is assigned to each pixel of an image according to weight and resolution assigned to this pixel and **in that** a selection of pixels (6) of a current image is carried out from the highest relevance value (5) among the projected pixels in order to provide a mask of the selected pixels.

4.  Method according to claim 1, **characterised in that** a partitioning (2) of the images of the sequence is performed by identifying, for a current image, the images whose corresponding viewpoints have an observation field possessing an intersection with the observation field relative to the current image, so as to form a list of images associated therewith, and **in that** the other images of the sequence for which the matching of the pixels of the current image (6) is performed are images from this list.

5.  Method according to claim 4, **characterised in that** the partitioning (2) of the images of the sequence is performed by removing, from the list associated with an image, the images which possess too few pixels corresponding to those of the current image.

6.  Method according to claim 3, **characterised in that** the operation of calculating the weights (4), of calculating the relevance (5) and of selecting the pixels are repeated until the masks obtained from the selection no longer change significantly.

7.  Method according to claim 3, **characterised in that** the operations of matching a pixel of the current image, by projection onto the other images, are stopped for this pixel as soon as a corresponding pixel having a higher relevance value has been found.

8.  Method according to claim 3, **characterised in that** the selection on the basis of the relevance values is performed when the ratio of the resolution values of the matched pixels lies within predefined limits.

9.  Method according to claim 1, **characterised in that** the pixel of the other image is the pixel closest to the projection point (6) on this other image.

10. Method according to claim 1, **characterised in that** the moving objects which move in the scene are detected in order to be extracted therefrom so as to obtain a static-type scene.

11. Method for navigating in a three-dimensional scene consisting in creating images as a function of the movement of the viewpoint, **characterised in that** the images are created from the three-dimensional model constructed according to the method of claim 1.

## Patentansprüche

1.  Verfahren zur Konstruktion eines dreidimensionalen Szenenmodells durch Bildsequenzanalyse , wobei jedes Bild einem durch seine Position und seine Ausrichtung definierten Aufnahmestandpunkt entspricht, **dadurch gekennzeichnet, dass** es die nachfolgenden Schritte umfasst:

    - Berechnung, für ein Bild, einer Tiefenkarte (1), die, in dem dreidimensionalen Raum, der Tiefe der Pixel des Bildes entspricht,
    - Berechnung, für ein Bild, einer Auflösungskarte (2), die, ausgehend von der Tiefenkarte, der dreidimensionalen Auflösung der Pixel des Bildes entspricht, wobei die dreidimensionale Auflösung, für jedes Pixel des Bildes, als die Dichte von Punkten in dem dreidimensionalen Raum im Verhältnis zu einem auf das Pixel zentrierten Fenster berechnet wird,

- in Übereinstimmung bringen (6) eines Pixels eines laufenden Bildes mit einem Pixel eines weiteren Bildes der Sequenz im Verhältnis zu einem gleichen Punkt der dreidimensionalen Szene, durch Projektion des Pixels des laufenden Bildes auf das andere Bild,

- Auswahl eines Pixels aus dem laufenden Bild (6) in Abhängigkeit von seiner dreidimensionalen Auflösung und von derjenigen der Pixel der weiteren Bilder der Sequenz, die mit diesem Pixel in Übereinstimmung gebracht werden,

- Herstellung des dreidimensionalen Modells (8) ausgehend von den ausgewählten Pixeln.

2. Verfahren nach Anspruch 1, **dadurch gekennzeichnet, dass** ein oder mehrere Bereiche, ausgehend von den ausgewählten Pixeln eines Bildes, dargestellt werden, wobei Gewichte berechnet und den Pixeln des Bildes (4) in Abhängigkeit von ihrer Zugehörigkeit oder nicht zu den Bereichen und von den geometrischen Eigenschaften der Bereiche zugeordnet werden, zu denen sie in dem Bild gehören, und dadurch, dass eine neue Auswahl von Pixeln (6) in Abhängigkeit von Auflösungswerten und Gewichtswerten ausgeführt wird, die den Pixeln zugewiesen sind.

3. Verfahren nach Anspruch 2, **dadurch gekennzeichnet, dass** jedem Pixel eines Bildes ein Relevanzwert (5) in Abhängigkeit von dem Gewicht und der Auflösung zugeordnet wird, die diesem Pixel zugewiesen sind, und dadurch, dass eine Auswahl der Pixel (6) aus einem laufenden Bild ausgehend von dem höchsten Relevanzwert (5) unter den Pixeln ausgeführt wird, die in Übereinstimmung gebracht werden, um eine Maske an ausgewählten Pixeln bereitzustellen.

4. Verfahren nach Anspruch 1, **dadurch gekennzeichnet, dass** eine Aufteilung (2) der Bilder der Sequenz ausgeführt wird, indem, für ein laufendes Bild, die Bilder identifiziert werden, deren entsprechende Aufnahmestandpunkte ein Beobachtungsfeld aufweisen, das einen Schnittpunkt mit dem Beobachtungsfeld im Verhältnis zu dem laufenden Bild besitzt, um eine Bilderliste zu bilden, die mit ihm verbunden ist, und dadurch, dass die anderen Bilder der Sequenz, für welche das in Übereinstimmung bringen der Pixel des laufenden Bildes (6) ausgeführt wird, aus Bildern seiner Liste bestehen.

5. Verfahren nach Anspruch 4, **dadurch gekennzeichnet, dass** eine Aufteilung (2) der Bilder der Sequenz ausgeführt wird, indem aus der Liste, die mit einem Bild verbunden ist, die Bilder, die zu wenig Pixel enthalten, die denjenigen des laufenden Bildes entsprechen, entfernt werden.

6. Verfahren nach Anspruch 3, **dadurch gekennzeichnet, dass** die Operationen zur Berechnung von Gewichten (4), zur Berechnung von Relevanz (5) und zur Auswahl der Pixel solange wiederholt werden, bis die Masken, die aus der Auswahl erhalten werden, sich nicht mehr bedeutend verändern.

7. Verfahren nach Anspruch 3, **dadurch gekennzeichnet, dass** die Operationen, um ein Pixel des laufenden Bildes, durch Projektion auf die weiteren Bilder, in Übereinstimmung zu bringen, für dieses Pixel beendet werden, sobald ein entsprechendes Pixel gefunden wird, das einen höheren Relevanzwert aufweist.

8. Verfahren nach Anspruch 3, **dadurch gekennzeichnet, dass** die Auswahl ausgehend von den Relevanzwerten ausgeführt wird, wenn das Verhältnis zwischen den Werten der Auflösung der in Übereinstimmung gebrachten Pixel sich innerhalb von vordefinierten Grenzen befindet.

9. Verfahren nach Anspruch 1, **dadurch gekennzeichnet, dass** das Pixel des weiteren Bildes aus dem Pixel besteht, das dem Projektionspunkt (6) auf dieses weitere Bild am nächsten liegt.

10. Verfahren nach Anspruch 1, **dadurch gekennzeichnet, dass** die sich in der Szene verschiebenden beweglichen Objekte erfasst werden, um aus ihr entfernt zu werden, damit eine Szene statischer Art erhalten wird.

11. Verfahren zum Navigieren in einer dreidimensionalen Szene daraus bestehend, dass die Bilder in Abhängigkeit von der Verschiebung des Aufnahmestandpunktes erstellt werden, **dadurch gekennzeichnet, dass** die Bilder ausgehend von dem dreidimensionalen Modell erstellt werden, das nach dem Verfahren von Anspruch 1 hergestellt wird.

Séquences d'images
Cartes de profondeur
Descriptions Points de vue — 1

Calcul des cartes de résolution — 2

Partitionnement de la séquence — 3

Calcul des poids — 4

Calcul des cartes de pertinence — 5

Sélection des pixels — 6

Masques des
pixels sélectionnés — 7

Construction du modèle 3D à
facettes — 8

**FIG.1**

**FIG.2**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Multi Viewpoint Stereo from uncalibrated Video Sequences. **KOCH R et al.** LECTURE NOTES IN COMPUTER SCIENCES. SPRINGER VERLAG, 01 Janvier 1998, vol. 1406, 55-71

- **RANDER PETER.** A Multi-Camera Method of 3D Digitization of Dynamic, Real-World Events. *THESIS,* 01 Mai 1998, 136